# EUROPÄISCHE PATENTSCHRIFT

(11) **EP 0 340 743 B1**
(45) Veröffentlichungstag und Bekanntmachung des Hinweises auf die Patenterteilung: **20.10.1993**
(21) Anmeldenummer: 89107968.3
(22) Anmeldetag: 03.05.1989
(51) Int. Cl.: B60P 3/20

(54) **Transportladeraum**
Transport load container
Conteneur de transport

(30) Priorität: 05.05.1988 DE 3815268
(43) Veröffentlichungstag der Anmeldung: 08.11.1989
(73) Patentinhaber: de Zeeuw, Hans, D-47228 Duisburg (DE)
(72) Erfinder: de Zeeuw, Hans, D-47228 Duisburg (DE)
(74) Vertreter: Schneiders, Josef

(56) Entgegenhaltungen:
- EP-A- 0 282 051
- US-A- 2 172 851
- US-A- 3 792 595
- US-A- 3 992 892
- US-A- 4 023 472

## Beschreibung

Die Erfindung bezieht sich auf einen Transportladeraum, der mittels eines Kälteaggregates zu kühlen ist, dessen Kaltluft von Austrittsdüsen eines unterhalb der Laderaumdecke verlaufenden Kanals austritt.

Von derartigen Transportladeräumen ist nach dem DE-U-75 12 997 bekannt, daß sie ein eigenes Kälteaggregat aufweisen, von dem ein Kaltluftzuführkanal unter der Decke verläuft. Die als Düsen austretende Kaltluft baut während des Betriebes vom Boden des Transportladeraums her einen das Kühlgut allseitig umgebenden Kältesee auf. Dabei ist jedoch nachteilig, daß sich die Kaltluft strähnenartig unmittelbar unter den benannten Düsen absenkt und während der Auffüllung des Transportladeraums einzelne Bereiche desselben nicht erreicht.

Der Erfindung liegt, hiervon ausgehend, die Aufgabenstellung zugrunde, daß die Kühlwirkung bereits während der Kältesee bei geschlossenem Transportladeraum aufgebaut wird, zu verbessern. Dies soll in einer Form geschehen, in welcher die nutzbare Innenhöhe des Transportladeraums möglichst groß bleibt. Desgleichen soll die Leistung des Kälteaggregates nicht durch erhöhte Strömungswiderstände nennenswert reduziert werden.

Die Erfindung löst diese Aufgabenstellung durch die in den Patentansprüchen gemachten Vorschläge.

Man kommt auf diese Weise zu einer insgesamt sehr großen Kaltluftaustrittsfläche, die in ihrem gesamten Bereich zu einem gleichmäßigen Austritt der Kaltluft führt. Dies bedeutet, daß das gesamte unterhalb der gitterförmigen Decke befindliche Kühlgut von der strömenden Kaltluft beaufschlagt wird, so daß eine sehr gleichmäßige Kälteleistung schon frühzeitig geschaffen werden kann. Im Vergleich zu einem Kaltluftkanal führen die erfindungsgemäß vorgesehenen Kaltluftkanäle zu kleineren Querschnittsdurchmessern, so daß auch unter Berücksichtigung der von letzteren beabstandeten gitterförmigen Decke noch eine in erheblicher Weise verbesserte Höhenausnutzung des Transportladeraums gegeben ist. Der sehr geringe Abstand der gitterförmigen Decke reicht zu der beschriebenen Vergleichmäßigung der Strömung aus.

Die Verteilung der Kaltluft vollzieht sich im Sinne der Erfindung mithin in zwei Stufen, von denen die erste Stufe das bekannt gewesene Kanalsystem umfasst, wohingegen die zweite Stufe die Vergleichmäßigung der aus den Kanälen austretenden Kaltluft im Sinne der Verteilung derselben auf die gitterförmige Decke bewirkt. Auf diese Weise wird die Kühlung der geladenen Güter, wie beispielsweise Molkereiprodukte, Gemüse, Obst und Fleischwaren, nicht nur durch die sich von unten allmählich aufbauende Kaltluftmasse bewirkt, sondern bereits dadurch, daß die Kaltluft über den von der gitterförmigen Decke, die sich über nahezu die gesamte Landeraumdecke erstreckt, gebildeten Querschnitt gleichmäßig nach unten strömt. Es kommt im Verlaufe dieser Strömung zu einem konvektiven Wärmeübergang, der den Wärmeübergang von der ruhenden Kaltluft übersteigt.

In den Gitterfeldern der gitterförmigen Decke werden die textilen Gewebe zweckmäßig mit randseitig an ihnen befestigten Klettverschlußbändern gehalten. Dies ermöglicht nicht nur eine leichte Montage, sondern auch eine leichte Wartung durch Austausch der Gewebe. Die Kaltluftkanäle werden zweckmäßig von Rohren gebildet, die Öffnungen in Form der Austrittsdüsen aufweisen.

Im Interesse einer wirkungsvollen, gleichmäßigen Verteilung auf die gitterförmige Decke sind die Austrittsdüsen mit gegen die Vertikalrichtung geneigten Achsen ausgeführt. Somit wird eine unmittelbare, punktförmige Aufblasung von Kaltluft auf die Gitterfelder vermieden.

Eine geringe Bauhöhe der Anordnung wird dann begünstigt, wenn die Rohre einen ovalen Querschnitt besitzen, und wenn sie mit ihren Querschnittsachsen horizontal liegend angeordnet werden.

Die Achsen der Austrittsdüsen können sich in ihrer Neigung bis in die Horizontalrichtung erstrecken. Zur Vermeidung einer gegenseitigen Beeinflussung werden die einander gegenüberliegenden Austrittsdüsen benachbarter Rohre versetzt gegeneinander angeordnet.

Die einzelnen Gitterfelder der Decke bestehen aus Kassetten, die in parallele Rahmenleisten der Decke einsetzbar sind. Die Kassetten sind Ihrerseits aus ihre Ränder bildenden Leisten gebildet.

Zur Befestigung der Gewebe lassen sich die erwähnten Leisten der Kassetten vorteilhaft mit Klettbändern belegen.

Die Vergleichmäßigung der Kaltluftströmung bedingt einen begrenzten Druckabfall, der von der Gewebedurchlässigkeit und von der gesamten Spannfläche der Decke abhängig ist. Zweckmäßig werden Deckenfläche und die Gewebedurchlässigkeit derart gewählt, daß der Druckabfall bis zu etwa 40 Pascal reicht. Dabei beträgt die Ausströmgeschwindigkeit aus der Gewebefläche vorteilhaft bis zu 0,2m/s.

Die Gewebe bestehen mit Vorteil aus einer Köper-Bindung mit dem Kurzzeichen K2/2, wobei die Bindung auf Luftdurchlässigkeit gewebt ist. Dabei kann eine Garnstärke von Nm20 zweifach bis Nm40 zweifach bestehen.

Die Gewebe werden weiterhin vorteilhaft derart ausgewählt, daß ihre Luftdurchlässigkeit zwischen 50 bis 1500 Nm/m²h liegt.

Zur weiteren Veranschaulichung der Erfindung wird auf die sich auf Ausführungsbeispiele beziehenden Zeichnungen Bezug genommen. Darin zeigen:
- Figur 1:: eine seitliche Ansicht des erfindungsgemäßen Transportladeraums,
- Figur 2:: einen Querschnitt entsprechend Figur 1,
- Figur 3:: eine vergrößerte Darstellung eines Deckenabschnittes im Längsquerschnitt,
- Figur 4:: eine perspektivische Darstellung des Transportladeraums,
- Figur 5:: eine vergrößerte Darstellung zweier Gitterfelder.

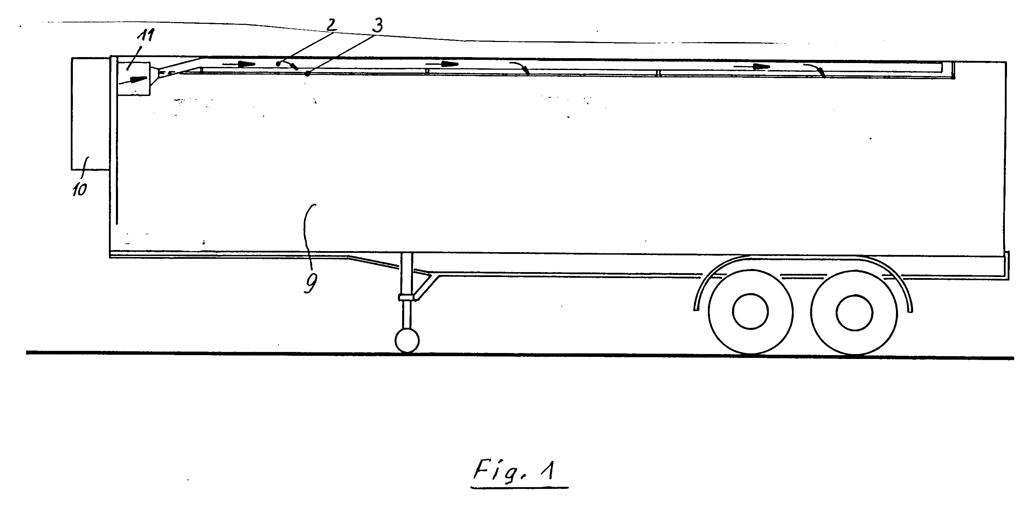

Figur 1 zeigt den erfindungsgemäßen Transportladeraum 9 mit einem eigenen Kälteaggregat 10, welches im Umluftverfahren betrieben wird. Die Kaltluft gelangt in den Verteiler 11 und von dort in die Kaltluftkanäle 2, in denen sie in Pfeilrichtung geführt ist. Die gitterförmige Decke 3 ist von den genannten Kaltluftkanälen 2 in vertikaler Richtung beabstandet.

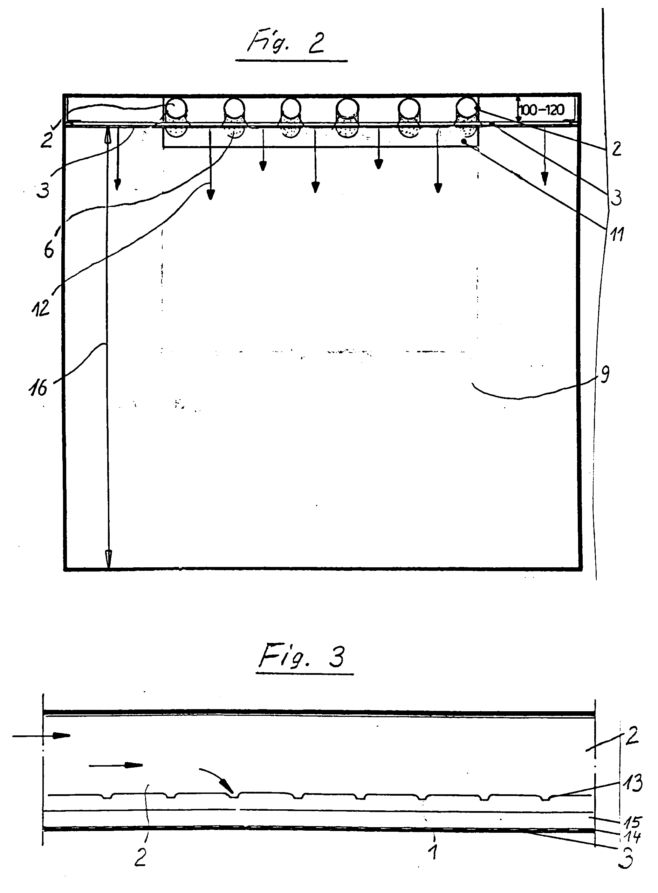

Wie die Querschnittsdarstellung gemäß Figur 2 erkennen läßt, beträgt der gesamte Abstand der gitterförmigen Decke 3 von der Oberkante des Transportladeraums lediglich etwa 100 bis 120 mm. An den Verteiler 11 sind mehrere, rohrförmige Kanäle 2 angeschlossen. Aus den sich in Form von Öffnungen 6 über den unteren Teil der Kanäle 2 verteilenden Austrittsdüsen strömt die Kaltluft aus, um sich gleichmäßig über den Querschnitt der gitterförmigen Decke 2 zu verteilen, aus der sie dann in Richtung der Strömungspfeile 12 nach abwärts austritt.

In vergrößerter Darstellung erkennt man einen der Kanäle 2 im Längsschnitt gemäß Figur 3. Die Austrittsdüsen 1 sind der Anschaulichkeit halber lediglich am unteren Rand des Kanals 2 wiedergegeben, um ihre düsenartigen Einläufe 13 sichtbar machen zu können. Die gitterförmige Decke 3 ist mit schematisch angedeuteten Klettverschlußbändern 14 an randseitigen Leisten 15 der Gitterfelder gehalten.

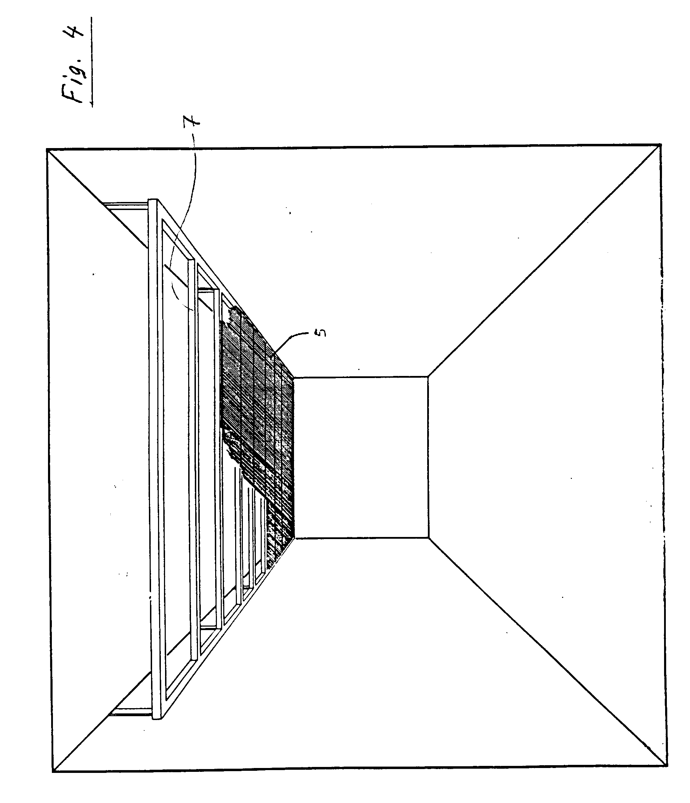

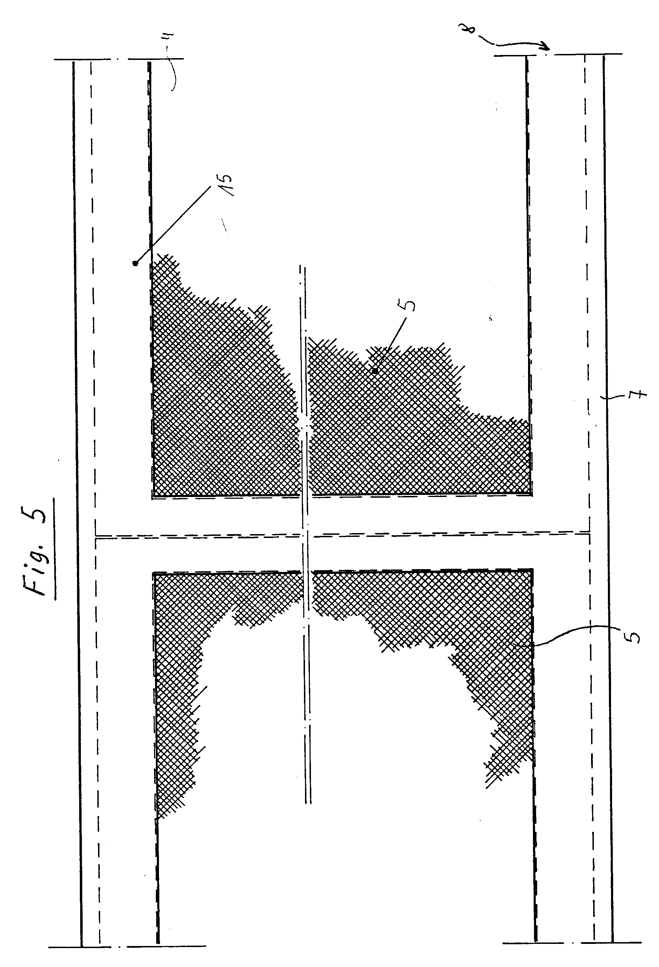

Wie die perspektivische Ansicht des Inneren des Transportladeraums gemäß Figur 4 erkennen läßt, werden die Gitterfelder der Decke im wesentlichen von parallelen Rahmenleisten 7 gebildet, zwischen welchen in Figur 5 vergrößert dargestellte Kassetten 8 eingesetzt sind. Diese Kassetten sind von den randseitigen Leisten 15 gebildet, die die einzelnen Gitterfelder 4 umgeben. Die randseitigen Leisten 15 tragen Klettbänder für die Befestigung der Gewebe 5.

Da sich erfindungsgemäß die gitterförmige Decke 3 mit nur geringem Abstand von der Laderaumdecke anordnen läßt, sofern die Durchmesser der Kanäle 2 entsprechend klein gewählt werden, kommt man zu einer beträchtlichen ausnutzbaren Laderaumhöhe 16, wie Figur 2 erkennen läßt. Die sich gleichmäßig über den gesamten Querschnitt absenkende Kaltluft erfasst dabei auch die am oberen Rande des Laderaums befindlichen Güter.

## Patentansprüche

1. Transportladeraum (9), der mittels eines Kälteaggregates (10) zu kühlen ist, dessen Kaltluft von Austrittdüsen (1) eines unterhalb der Laderaumdecke verlaufenden Kaltluftkanals austritt, unter Verwendung einer Einrichtung zur Erzeugung gleichmäßiges Luftströmung, bei welcher die dem Kaltluftkanal (2) entströmende Luft ein mit Abstand angeordnetes, textiles Gewebe (5) durchströmt, das in Gitterfelder (4) eingesetzt ist,
dadurch gekennzeichnet,
daß die Gitterfelder (4) von Gitterstäben (z.B. Rahmenleisten (7)) gehalten sind,
die eine gitterförmige Decke (3) des Transportladeraums (9) bilden,
oberhalb welcher die Kaltluftkanäle (2) mit Austrittsdüsen (1) verlaufen, deren Achsen gegen die Vertikalrichtung geneigt sind.

2. Transportladeraum nach Anspruch 1,
dadurch gekennzeichnet,
daß die Kaltluftkanäle (2) von Rohren gebildet sind.

3. Transportladeraum nach den Ansprüchen 1 und 2,
dadurch gekennzeichnet,
daß die Rohre von ovalem Querschnitt sind, wobei sie mit ihren großen Querschnittsachsen horizontal liegend angeordnet sind.

4. Transportladeraum nach den Ansprüchen 1 - 3, dadurch gekennzeichnet, daß die Austrittsdüsen (1) zwischen der Vertikalrichtung und der Horizontalrichtung verlaufende Achsen aufweisen, und daß einander gegenüberliegende Austrittsdüsen (1) benachbarter Rohre versetzt zueinander angeordnet sind.

5. Transportladeraum nach den Ansprüchen 1 - 4, dadurch gekennzeichnet, daß die Gitterfelder von in parallele Rahmenleisten (7) eingesetzten Kassetten (8) gebildet sind, die ihrerseits randseitig Leisten (15) aufweisen.

6. Transportladeraum nach Anspruch 5, dadurch gekennzeichnet, daß die randseitigen Leisten (8) mit Klettbändern für die Gewebebefestigung belegt sind.

7. Transportladeraum nach den Ansprüchen 1 - 6, dadurch gekennzeichnet, daß die Gewebedurchlässigkeit einen Druckabfall von bis zu 40 Pascal entsprechend gewählt ist.

8. Transportladeraum nach den Ansprüchen 1 - 7, dadurch gekennzeichnet, daß die Gewebefläche einer Ausströmgeschwindigkeit von bis zu 0,2m/s entsprechend gewählt ist.

9. Transportladeraum nach den Ansprüchen 1 - 8, dadurch gekennzeichnet, daß das Gewebe aus einer Köper-Bindung mit dem Kurzzeichen K2/2 besteht.

10. Transportladeraum nach den Ansprüchen 1 - 9, dadurch gekennzeichnet, daß für das Gewebe eine Garnstärke von Nm 20 2-fach bis Nm 40 2-fach besteht.

11. Transportladeraum nach den Ansprüchen 1 - 10, dadurch gekennzeichnet, daß für das Gewebe eine Luftdurchlässigkeit von 50 bis 1500 Nm³/m²h besteht.

## Claims

1. A freight transportation space (9) which is to be cooled by means of a cooling unit (10) whose cold air issues from outlet nozzles (1) of a cold air duct extending beneath the freight space ceiling, using a device for producing a uniform air flow, in which the air flowing from the cold air duct (2) flows through a textile fabric (5) which is disposed at a spacing and which is fitted into grid panels (4),
characterised in that
the grid panels (4) are held by grid bars (for example frame bar members (7)), which form a grid-like ceiling (3) of the freight transportation space (9),
above which extend the cold air ducts (2) with outlet nozzles (1) whose axes are inclined relative to the vertical direction.

2. A freight transportation space according to claim 1 characterised in that the cold air ducts (2) are formed by pipes.

3. A freight transportation space according to claims 1 and 2 characterised in that the pipes are of oval cross-section, being arranged with their long cross-sectional axes lying horizontal.

4. A freight transportation space according to claims 1 to 3 characterised in that the outlet nozzles (1) have axes extending between the vertical direction and the horizontal direction and that mutually oppositely disposed outlet nozzles (1) of adjacent pipes are arranged in mutually displaced relationship.

5. A freight transportation space according to claims 1 to 4 characterised in that the grid panels are formed by cassettes (8) which are fitted into parallel frame bar members (7) and which in turn have bar members (15) at their edges.

6. A freight transportation space according to claim 5 characterised in that the bar members (8) at the edges are covered with hook-and-loop cling strips for fixing the fabric.

7. A freight transportation space according to claims 1 to 6 characterised in that the permeability of the fabric is selected to correspond to a pressure drop of up to 40 Pascals.

8. A freight transportation space according to claims 1 to 7 characterised in that the fabric area is selected to correspond to a discharge flow rate of up to 0.2 m/s.

9. A freight transportation space according to claims 1 to 8 characterised in that the fabric comprises a twill weave bearing the short designation K2/2.

10. A freight transportation space according to claims 1 to 9 characterised in that the fabric uses a yarn size of from Nm 20 2-times to Nm 40 2-times.

11. A freight transportation space according to claims 1 to 10 characterised in that the fabric has a permeability to air of from 50 to 1500 Nm³/m²h.

## Revendications

1. Espace de chargement de transport (9) à refroidir au moyen d'un appareil frigorifique (10) dont l'air froid sort par des buses de sortie (1) d'un canal d'air froid s'étendant en-dessous du plafond de l'espace de chargement, en utilisant un dispositif pour produire un écoulement d'air régulier, dans lequel l'air s'échappant du canal d'air froid (2) traverse un tissu textile (5) disposé à une certaine distance qui est mis en place dans des champs à grille (4)
caractérisé en ce que les champs à grille (4) sont maintenus par des tiges à grille (par exemple des barres de cadre (7)) qui constituent un plafond en forme de grille (3) de l'enceinte de chargement de transport (9) audessus duquel les canaux d'air froid (2) s'étendent avec les buses de sortie (1) dont les axes sont inclinés vers la direction verticale.

2. Espace de chargement de transport selon la revendication 1, caractérisé en ce que les canaux d'air froid (2) sont constitués par des tubes.

3. Espace de chargement de transport selon les revendications 1 et 2, caractérisé en ce que les tubes ont une section transversale ovale et sont disposés horizontalement par leurs grands axes de section transversale.

4. Espace de chargement de transport selon les revendications 1 à 3, caractérisé en ce que les buses de sortie (1) présentent des axes s'étendant entre la direction verticale et la direction horizontale, et en ce que des buses de sortie (1) opposées les unes aux autres de tubes avoisinants sont disposées de façon décalée les unes par rapport aux autres.

5. Espace de chargement de transport selon les revendications 1 à 4, caractérisé en ce que les champs à grille sont constitués par des cassettes (8) insérées dans des barres de cadre (7) parallèles et qui présentent des barres (15) côté bord.

6. Espace de chargement de transport selon la revendication 5, caractérisé en ce que les barres (8) côté bord sont équipées de bandes à chardons pour la fixation du tissu.

7. Espace de chargement de transport selon les revendications 1 à 6, caractérisé en ce que la perméabilité du tissu est choisie de manière à correspondre à une chute de pression allant jusqu'à 40 Pascal.

8. Espace de chargement de transport selon les revendications 1 à 7, caractérisé en ce que la surface du tissu est choisie pour correspondre à une vitesse d'écoulement allant jusqu'à 0,2m/s.

9. Espace de chargement de transport selon les revendications 1 à 8, caractérisé en ce que le tissu est constitué d'une armure croisée portant le symbole K2/2.

10. Espace de chargement de transport selon les revendications 1 à 9, caractérisé en ce que le tissu a une épaisseur de fil de Nm 20 double à Nm 40 double.

11. Espace de chargement de transport selon les revendications 1 à 10, caractérisé en ce que le tissu a une perméabilité à l'air de 50 à 1500 Nm³/m²h.
